# EUROPEAN PATENT APPLICATION

(11) **EP 2 551 835 A1**
(43) Date of publication of application: **30.01.2013**
(21) Application number: 11758923.4
(22) Date of filing: 20.01.2011
(51) Int. Cl.: G08G 1/16, B60R 1/00, B60R 21/00, H04N 7/18

(54) **PROCESSING DEVICE FOR ASSISTING DRIVING OF VEHICLE, VEHICLE DRIVING ASSISTING DEVICE, AND VEHICLE DEVICE**

(30) Priority: 24.03.2010 JP 2010068522
(71) Applicant: Kabushiki Kaisha Toshiba, Minato-ku Tokyo 105-8001 (JP)
(72) Inventor: IMAI, Kosuke, Minato-ko Tokyo (JP); FURUKAWA, Kenji, Minato-ko Tokyo (JP); OZAKI, Nobuyuki, Minato-ko Tokyo (JP)
(74) Representative: HOFFMANN EITLE
(86) International application number: PCT/JP2011/000298
(87) International publication number: WO 2011/118110

(57) **Abstract**

A vehicle driving support processing device, including a first data acquisition unit that acquires left rear image data, a second data acquisition unit that acquires right rear image data, and a lane departure detection unit having a lane departure detection state and a lane departure detection inhibition state, wherein the lane departure detection unit in the lane departure detection state estimates a first distance between a left-side boundary and the vehicle based on the left rear image data, estimates a second distance between a right-side boundary and the vehicle based on the right rear image data, and performs a first signal generation operation to generate a first signal for at least one of providing a warning, controlling at least one of a steering gear and a braking device, and transmitting a signal to other vehicles than the vehicle when at least one of the first distance being equal to a first reference value derived by a preset method or less and the second distance being equal to a second reference value derived by a preset method or less applies.

## Description

This application is based upon and claims the benefit of priority from Japanese Patent Application No. 2010-68522 filed on March 24, 2010 in Japan, the entire contents of which are incorporated herein by reference.

### BACKGROUND OF THE INVENTION

### 1. Field of the Invention

Embodiments described herein relate generally to a vehicle driving support processing device, a vehicle driving support device, and a vehicle device.

### 2. Description of Related Art

A lane departure warning system (LDWS) that warns the driver of a departure from the lane on which the vehicle is running is known.

For example, Japanese Patent Application Laid-Open No. 2008-250904 proposes a configuration that improves the accuracy of white line recognition by using an image captured by a vehicle-mounted camera that captures images in the lateral direction if recognition accuracy of a white line is not sufficient with a vehicle-mounted camera that captures images in the forward direction.
However, there is scope for improvement to be able to detect a lane departure with stability.

### BRIEF DESCRIPTION OF THE DRAWINGS

FIG. 1 is a schematic diagram illustrating an operation of a vehicle driving support device according to a first embodiment;
FIG. 2 is a schematic diagram illustrating a configuration of the vehicle driving support device according to the first embodiment;
FIG. 3 is a flow chart illustrating an overview of the operation of the vehicle driving support device according to the first embodiment;
FIG. 4 is a flow chart illustrating the operation of the vehicle driving support device according to the first embodiment;
FIG. 5 is a flow chart illustrating the operation of the vehicle driving support device according to the first embodiment;
FIG. 6 is a flow chart illustrating the operation of the vehicle driving support device according to a second embodiment; and
FIG. 7 is a flow chart illustrating the operation of the vehicle driving support device according to a third embodiment.

### DETAILED DESCRIPTION OF EMBODIMENTS

An embodiment provides a vehicle driving support processing device and a vehicle driving support device that detect a lane departure with stability.

According to an aspect of the present invention, a vehicle driving support processing device, including a first data acquisition unit that acquires left rear image data captured by a left rear imaging unit capturing a left rear image of a vehicle running on a travel lane, a second data acquisition unit that acquires right rear image data captured by a right rear imaging unit capturing a right rear image of the vehicle, and a lane departure detection unit having a lane departure detection state and a lane departure detection inhibition state, wherein the lane departure detection unit in the lane departure detection state estimates a first distance between a left-side boundary of the travel lane on a left side of the vehicle and the vehicle based on the left rear image data acquired by the first data acquisition unit, estimates a second distance between a right-side boundary of the travel lane on a right side of the vehicle and the vehicle based on the right rear image data acquired by the second data acquisition unit, and performs a first signal generation operation to generate a first signal for at least one of providing a warning to a driver of the vehicle, controlling at least one of a steering gear and a braking device of the vehicle, and transmitting a signal to other vehicles than the vehicle when at least one of the first distance being equal to a first reference value derived by a preset method or less and the second distance being equal to a second reference value derived by a preset method or less applies is provided.

According to another aspect of the present invention, a vehicle driving support processing device, including a first data acquisition unit that acquires left rear image data captured by a left rear imaging unit capturing a left rear image of a vehicle running on a travel lane, a second data acquisition unit that acquires right rear image data captured by a right rear imaging unit capturing a right rear image of the vehicle, and a lane departure detection unit having a lane departure detection state and a lane departure detection inhibition state, wherein the lane departure detection unit in the lane departure detection state estimates a first distance between a left-side boundary of the travel lane on a left side of the vehicle and the vehicle based on the left rear image data acquired by the first data acquisition unit, estimates a second distance between a right-side boundary of the travel lane on a right side of the vehicle and the vehicle based on the right rear image data acquired by the second data acquisition unit, and performs a first signal generation operation to generate a first signal for at least one of providing a warning to a driver of the vehicle, controlling at least one of a steering gear and a braking device of the vehicle, and transmitting a signal to other vehicles than the vehicle when one of the first distance being equal to a first reference value derived by a preset method or less and the second distance being equal to a second reference value derived by a preset method or less applies is provided.

According to still another aspect of the present invention, a vehicle driving support device, including one of the above vehicle driving support processing devices, the left rear imaging unit that captures the left rear image of the vehicle, and the right rear imaging unit that captures the right rear image of the vehicle is provided.

According to the present aspect, a vehicle driving support processing device and a vehicle driving support device that detect a lane departure with stability can be provided.

Each embodiment of the present invention will be described below with reference to the drawings.
In the present specification and each drawing, the same reference numerals are attached to similar elements described about drawings that have appeared and detailed description thereof is omitted when appropriate.

### (First embodiment)

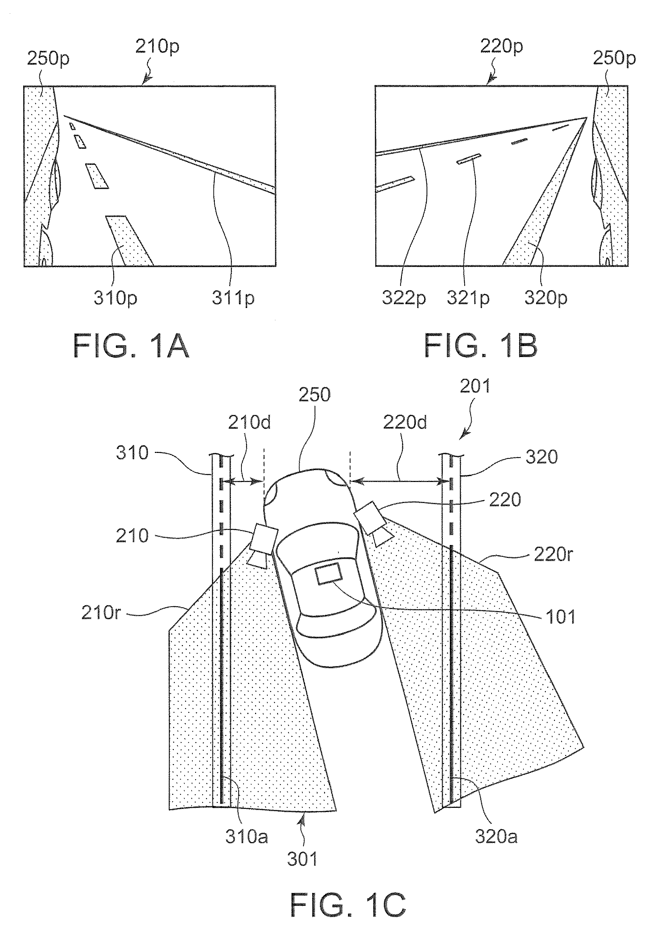

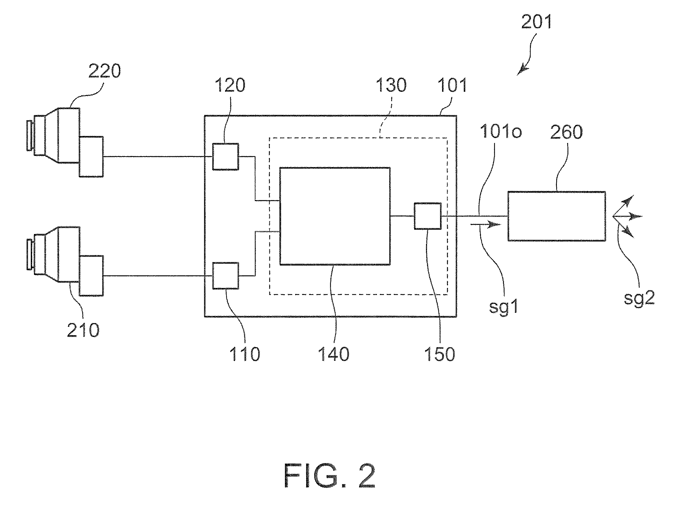

FIG. 1 is a schematic diagram illustrating the operation of a vehicle driving support device according to the first embodiment.
That is, FIG. 1A illustrates a left rear image of the vehicle driving support device and FIG. 1B illustrates a right rear image of the vehicle driving support device. FIG. 1C illustrates the operation of the vehicle driving support device. FIG. 2 is a schematic diagram illustrating the configuration of the vehicle driving support device according to the first embodiment.

As shown in FIG. 1C, a vehicle driving support device 201 according to the present embodiment is mounted on a vehicle 250. The vehicle 250 runs on a travel lane 301 (lane).

The vehicle driving support device 201 can include a left rear imaging unit 210 that captures left rear images of the vehicle 250 and a right rear imaging unit 220 that captures right rear images of the vehicle 250.
For example, a CMOS sensor or CCD sensor is used for the left rear imaging unit 210 and the right rear imaging unit 220. However, the present embodiment is not limited to such an example and any imaging device may be used for the left rear imaging unit 210 and the right rear imaging unit 220.

The left rear imaging unit 210 may have a function to horizontally flip the captured image to output left rear image data corresponding to the horizontally flipped image. The right rear imaging unit 220 may have a function to horizontally flip the captured image to output right rear image data corresponding to the horizontally flipped image.

As shown in FIG. 2, the vehicle driving support device 201 includes a vehicle driving support processing device 101.
The vehicle driving support processing device 101 includes a first data acquisition unit 110, a second data acquisition unit 120, and a lane departure detection unit 130.
The first data acquisition unit 110 acquires left rear image data captured by the left rear imaging unit 210 that captures left rear images of the vehicle 250 running on the travel lane 301. The second data acquisition unit 120 acquires right rear image data captured by the right rear imaging unit 220 that captures right rear images of the vehicle 250 running on the travel lane 301.

The left rear imaging unit 210 may be arranged on a left lateral of the vehicle or on a left door mirror, near a left front wheel, or immediately below the body of the vehicle. The right rear imaging unit 220 may be arranged on a right lateral of the vehicle or on a right door mirror or near a right front wheel of the vehicle.

If an electronic mirror in which an existing door mirror is replaced by a camera is adopted, it is advantageous to mount the imaging unit in a door mirror position that makes an additional camera unnecessary in terms of cost. If the imaging unit specializes only in the detection of a lane, detection accuracy of a lane is improved by mounting the imaging unit in a position near the road surface such as near the front wheel or immediately below the body of the vehicle.

Any method such as electric connection, optical connection, and various wireless methods can be applied to communication between the left rear imaging unit 210 and the first data acquisition unit 110 and between the right rear imaging unit 220 and the second data acquisition unit 120.

As shown in FIG. 1C, the lane departure detection unit 130 estimates a first distance 210d between a left-side boundary 310a of the travel lane 301 on the left side of the vehicle 250 and the vehicle 250 based on left rear image data acquired by the first data acquisition unit 110. The lane departure detection unit 130 estimates a second distance 220d between a right-side boundary 320a of the travel lane 301 on the right side of the vehicle 250 and the vehicle 250 based on right rear image data acquired by the second data acquisition unit 120.

Then, the lane departure detection unit 130 has a lane departure detection state and a lane departure detection inhibition state.

When the lane departure detection unit 130 is in a lane departure detection state, if at least one of the estimated first distance 210d being equal to a first reference value derived by a predetermined method or less and the estimated second distance 220d being equal to a second reference value derived by a predetermined method or less applies, the lane departure detection unit 130 performs a first signal generation operation that generates a first signal sg1.

That is, the first signal is generated when the distance to a lane on the left or right side or distances to lanes on both sides come close to a reference value or below.

Alternatively, when the lane departure detection unit 130 is in a lane departure detection state, only if one of the estimated first distance 210d being equal to the first reference value derived by the predetermined method or less and the estimated second distance 220d being equal to the second reference value derived by the predetermined method or less applies, the lane departure detection unit 130 performs the first signal generation operation that generates the first signal sg1.

That is, if the first distance 210d is equal to the first reference value or less and the second distance 220d is equal to the second reference value or less, the first signal generation operation is not performed and only if one of the distances is equal to the reference vale or less, the first signal generation operation is performed.

That is, if distances to both the left and right lanes are equal to the reference value or less, the first signal can be inhibited from being generated. This is intended to prevent the driver from feeling annoying due to excessive issuance of warnings when passing a narrow road.

In the above paragraphs [0020] and [0021], a difference arises if the vehicle width for the local vehicle is narrow.

Then, as will be described later, when the lane departure detection unit 130 is in a lane departure detection inhibition state, the above first signal generation operation is not performed.

The lane departure detection inhibition state can include, for example, a case when, if a direction indicator of the vehicle 250 is operating, the elapsed time after the transition from the operating state to the non-operating state of the direction indicator is equal to a preset reference time or less, a case when the speed of the vehicle 250 is equal to a preset value or less (for example, when stopped or driving at reduced speed), and a case when the width of the travel lane 301 is narrower than a predetermined reference value. In such cases, the lane departure detection unit 130 does not perform the first signal generation operation.

In the present concrete example, the lane departure detection unit 130 includes an operation unit 140 and a first signal generator 150.
The estimation of the first distance 210d, the estimation of the second distance 220d, the comparison between the first distance 210d and the first reference value, and the comparison between the second distance 220d and the second reference value are performed by, for example, the operation unit 140. Then, the first signal sg1 is generated by the first signal generator 150 based on an execution result of the operation unit 140.

The first signal sg1 is a signal intended for at least one of providing a warning to the driver of the vehicle 250, controlling at least one of a steering gear and a braking device of the vehicle 250, and transmitting a signal to other vehicles than the vehicle 250.

That is, if the vehicle 250 is estimated to have departed from the travel lane 301 or to be likely to depart, the vehicle driving support processing device 101 outputs the above first signal sg1 as an output 101o of an LDWS result. Otherwise, the vehicle driving support processing device 101 does not output the first signal sg1 as an LDWS result. That is, for example, another signal corresponding to a "normal" state as an LDWS result and different from the first signal sg1 is output.

In the present concrete example, the first signal sg1 is supplied to a warning generator 260. The warning generator 260 acquires the first signal sg1 and generates a second signal sg2 containing at least one of a sound signal, tactile signal, olfactory signal, and optical signal based on the first signal sg1. The second signal sg2 is provided to the driver of the vehicle 250.

The vehicle driving support device 201 may further include the warning generator 260. If the vehicle driving support device 201 further includes the warning generator 260, the lane departure detection unit 130 can be inhibited from performing an operation to generate the second signal sg2 when the lane departure detection unit 130 is in a lane departure detection inhibition state. That is, for example, the vehicle driving support device 201 acquires information that the lane departure detection unit 130 is in a lane departure detection inhibition state by any communication method and, based on the information, inhibits the generation of the second signal sg2.

The vehicle driving support processing device 101 and the vehicle driving support device 201 configured as described above can detect a lane departure with stability.

As shown in FIG. 1C, the travel lane 301 on which the vehicle 250 runs has the left-side boundary 310a and the right-side boundary 320a. The left-side boundary 310a is set, for example, as the center of a left visible lane marking 310, which is the left-side visible lane marking of the travel lane 301. The right-side boundary 320a is set, for example, as the center of a right visible lane marking 320, which is the right-side visible lane marking of the travel lane 301. The visible lane marking contains a guidepath wire arranged intentionally on a boundary line that is not covered with snow or the like and can directly be recognized visually by the driver during driving. The visible lane marking is, for example, a white line provided on the road.

The left-side boundary 310a may be set as the position of an incidental visible road feature indicating a road edge on the left side of the travel lane 301. Similarly, the right-side boundary 320a may be set as the position of an incidental visible road feature indicating a road edge on the right side of the travel lane 301. The incidental visible road feature indicating a road edge is a pattern/structure on the road that is not intended to explicitly indicate the lane boundary, but implicitly indicates the lane boundary and includes the joint of pavement, shoulder, curbstone, track, and wheel tracks of previous vehicles.

To simplify the description, a case when the left visible lane marking 310 and the right visible lane marking 320 are provided on the travel lane 301 and also the left-side boundary 310a is set as the center of the left visible lane marking 310 and the right-side boundary 320a is set as the center of the right visible lane marking 320 will be described below.

As shown in FIG. 1C, the left rear imaging unit 210 images a left rear monitoring region 210r. The right rear imaging unit 220 images a right rear monitoring region 220r.

FIGS. 1A and 1B illustrate images captured by the left rear imaging unit 210 and the right rear imaging unit 220 respectively.
As shown in FIG. 1A, in a left rear image 210p captured by the left rear imaging unit 210, for example, an image 310p of the left visible lane marking 310 appears together with an image 250p of the vehicle 250. In the present concrete example, an image 311p of a road edge further to the left from the left visible lane marking 310 appears.

As shown in FIG. 1B, on the other hand, in a right rear image 220p captured by the right rear imaging unit 220, for example, an image 320p of the right visible lane marking 320 appears together with the image 250p of the vehicle 250. In the present concrete example, an image 321p of the visible lane marking further to the right of the right visible lane marking 320 and an image 322p of a road edge further to the right appear. The image 321p and the image 322p are images of the visible lane marking of the opposite lane of the travel lane 301 on which the vehicle 250 is running.

As will be described later, the first distance 210d, which is the distance between the left-side boundary 310a and the vehicle 250, is derived based on image data of the left rear image 210p captured by the left rear imaging unit 210. Also, the second distance 220d, which is the distance between the right-side boundary 320a and the vehicle 250, is derived based on image data of the right rear image 220p captured by the right rear imaging unit 220.

Then, a lane departure of the vehicle 250 is detected based on the first distance 210d and the second distance 220d and the first signal sg1 corresponding to the lane departure warning is generated. Then, based on the first signal sg1, the second signal sg2 containing at least one of a sound signal, tactile signal, olfactory signal, and optical signal is provided to the driver.

The sound signal in the second signal sg2 can contain, for example, a sound generated by a sound generator such as a speaker, chime, or buzzer mounted on the vehicle 250. The tactile signal in the second signal sg2 can contain a haptic warning stimulating the driver's contact, vibrations, forces, and motion intervals. The haptic warning includes a motion of a steering wheel, vibrations of the steering wheel, and vibrations of a sheet or pedal. The olfactory signal in the second signal sg2 contains various stimuli acting on olfaction, for example, a perfume odor, irritating odor, offensive odor, and odor to shake off drowsiness. The optical signal in the second signal sg2 can contain lighting of a lamp and changes of light by a display device such as a display. The extent of the second signal sg2 can be set to increase with the passage of time. Accordingly, the driver can be notified of a lane departure more effectively.

In the present embodiment, the road can be inhibited from being blocked by the vehicle 250 or another vehicle during imaging by capturing left and right rear images of the vehicle 250 by separate imaging units (the left rear imaging unit 210 and the right rear imaging unit 220). Accordingly, an image of the road near the vehicle 250 can be captured. Then, boundaries (the left-side boundary 310a and the right-side boundary 320a) of lanes can be detected from the image of the road near the vehicle 250 and thus, stable detection of the lane is enabled.

For example, in a comparative example in which the lane is detected by using cameras that capture images in the forward direction of the vehicle, it is more likely to occur that the image of the road is blocked by a vehicle different from the vehicle 250 (for example, the vehicle running in front of the vehicle 250) so that, for example, the needed visible lane marking cannot be imaged. If the left and right visible lane markings are imaged by one camera capturing images in the forward direction of the vehicle, both of the left and right visible lane markings are imaged by one camera and thus a distant visible lane marking is imaged when viewed from the vehicle, leading to decreased accuracy of images and making it more difficult to detect the visible lane marking.

Similarly, for example, in a comparative example in which the lane is detected by using cameras that capture images in the backward direction of the vehicle, it is more likely to occur that the image of the road is blocked by the vehicle 250 and other vehicles so that, for example, the needed visible lane marking cannot be imaged. Moreover, a distant visible lane marking is imaged when viewed from the vehicle and thus, the accuracy of images decreases and it becomes more difficult to detect the visible lane marking.

Further, in a comparative example in which images in the forward direction and one lateral direction are captured, the accuracy of detection of the visible lane marking in the other lateral direction decreases.

According to the present embodiment, by contrast, the visible lane marking can be inhibited from being blocked by other vehicles by capturing both of left and right rear images. That is, excluding the case of changing lanes, the vehicle will never always run on a visible lane marking. Thus, the left visible lane marking 310 on the left side of the vehicle 250 is hardly blocked by other vehicles and is imaged by the left rear imaging unit 210. Similarly, the right visible lane marking 320 on the right side of the vehicle 250 is hardly blocked by other vehicles and is imaged by the right rear imaging unit 220.

That is, as shown in FIGS. 1A and 1B, the left visible lane marking 310 and the right visible lane marking 320 are almost always imaged. Then, the left visible lane marking 310 and the right visible lane marking 320 are imaged in a wide range from close to the vehicle 250 to away from the vehicle 250. Thus, the left visible lane marking 310 and the right visible lane marking 320 can be detected with stability so that the accuracy of detection is high.

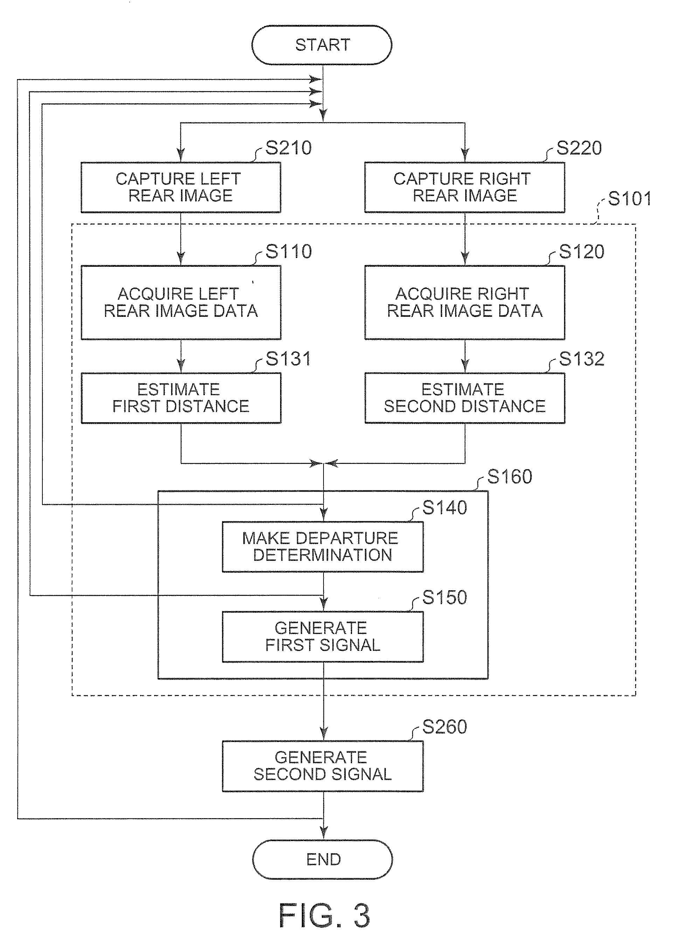

FIG. 3 is a flow chart illustrating an overview of the operation of the vehicle driving support device according to the first embodiment.

As shown in FIG. 3, the vehicle driving support device 201 according to the present embodiment captures a left rear image of the vehicle 250 (step S210) and a right rear image (step S220). The left rear image is captured by the left rear imaging unit 210 and the right rear image is captured by the right rear imaging unit 220. The left rear image and the right rear image may be captured at all times or, for example, alternately at predetermined intervals.

Then, left rear image data is acquired (step S110) and right rear image data is acquired (step S120). The left rear image data is acquired by the first data acquisition unit 110 and the right rear image data is acquired by the second data acquisition unit 120. The left rear image data and the right rear image data may be acquired at all times or, for example, alternately at predetermined intervals.

Then, the first distance 210d between the left-side boundary 310a and the vehicle 250 is estimated (step S131) and the second distance 220d between the right-side boundary 320a and the vehicle 250 is estimated (step S132). The first distance 210d and the second distance 220d are estimated by, for example, the operation unit 140. The first distance 210d and the second distance 220d may be estimated at all times or, for example, alternately at predetermined intervals.

Then, whether or not the vehicle 250 has departed from the lane is determined based on the estimated first distance 210d and second distance 220d (step S140). That is, the first distance 210d and a first reference value are compared and also the second distance 220d and a second reference value are compared. Then, if, as a result of comparison, at least one of the first distance 210d being equal to the first reference value derived by a predetermined method or less and the second distance 220d being equal to the second reference value derived by a predetermined method or less applies, the vehicle 250 is determined to have departed from the lane. Moreover, only if, as a result of comparison, one of the first distance 210d being equal to the first reference value derived by the preset method or less and the second distance 220d being equal to the second reference value derived by the preset method or less applies, the vehicle 250 may be determined to have departed from the lane.

If the vehicle 250 is determined not to have departed from the lane, the processing returns to steps S210 and S220.

Then, if the vehicle 250 is determined to have departed from the lane, the first signal sg1 is generated (step S150). That is, the first signal generation operation is performed.

The operation (lane departure warning signal output operation) (step S160) including the departure determination (step S140) and the generation of the first signal sg1 (step S150) described above is performed by the vehicle driving support processing device 101.
That is, in step S160, step S140 (departure determination) and step S150 (determination of the first signal sg1) are executed based on conditions described later or are not executed. If step S140 and step S150 are not executed, the processing returns to step S210 and step S220.

Alternatively, in step S160, settings are made so that step S140 is executed and then step S150 is executed or is not executed based on the conditions described later. If step S150 is not executed, the processing returns to step S210 and step S220.

Then, if step S150 (generation of the first signal sg1) is executed, the second signal sg2 containing at least one of a sound signal, tactile signal, olfactory signal, and optical signal is generated based on the first signal sg1 (step S260). That is, a lane departure warning is issued to the driver. The second signal sg2 is generated by the warning generator 260. Then, the processing returns to step S210 and step S220.

The above operation can be performed when a start signal of an overall operation of the vehicle driving support device 201 is input and the above operation can be terminated when an end signal is input.

The vehicle driving support processing device 101 executes step S101 containing the above steps S110, S120, S131, S132, and S160. Step S160 contains step S140 and step S150.

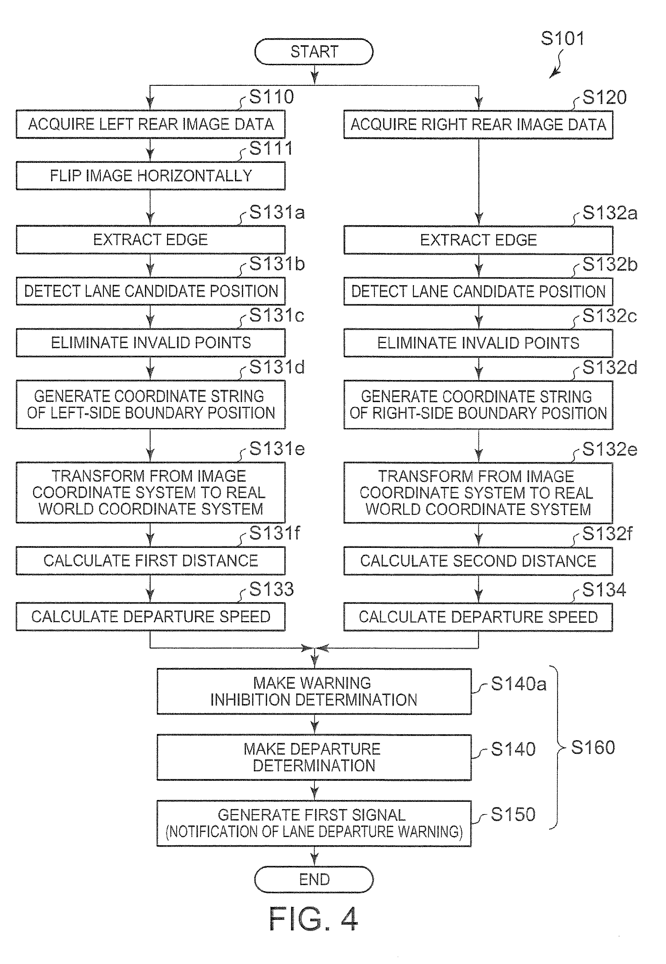

FIG. 4 is a flow chart illustrating the operation of the vehicle driving support device according to the first embodiment.
That is, FIG. 4 shows a concrete example of step S101, which is an operation of the vehicle driving support processing device 101.

As shown in FIG. 4, left rear image data is first acquired by the vehicle driving support device 201 according to the present embodiment (step S110). Then, for example, the image of the left rear image data is horizontally flipped if necessary (step S111).

Then, the following is done to detect the left-side boundary 310a. That is, range filter processing is performed on the image data to extract the edge of the image (step S131a). Then, based on the extracted edge, lane candidate positions are detected (step S131b). Further, invalid points are eliminated from the detected lane candidate positions (step S131c). Based on the results, a coordinate string of positions of the left-side boundary 310a is generated (step S131d). The generation of a coordinate string of positions of the left-side boundary 310a can contain a derivation of an approximation about the position of the left-side boundary 310a. Accordingly, the left-side boundary 310a is detected.

Further, regarding the detected left-side boundary 310a, the image coordinate system is transformed into a real world coordinate system (step S131e). Then, the first distance 210d is calculated based on the left-side boundary 310a whose coordinate system has been transformed (step S131f). For example, the distance between the left-side boundary 310a in a position of the left front wheel of the vehicle 250 and the vehicle 250 is calculated as the first distance 210d. However, the first distance 210d is not limited to the above example and the vicinity of the left front headlight of the vehicle 250 or the vicinity of the left door mirror may be adopted.

Then, the departure speed is calculated (step S133). That is, the speed at which the vehicle 250 approaches the left-side boundary 310a is calculated. The departure speed is, for example, an approach speed in a direction perpendicular to the lane boundary (for example, the left-side boundary 310a or the right-side boundary 320a) of the vehicle when a warning is generated.

In the above case, step S110 and step S111 correspond to left image acquisition processing, step S131a to step S131d correspond to left lane detection processing, and step S131e, step S131f, and step S133 correspond to left lane distance estimation processing (first distance estimation processing). Step S131a to step S131f correspond to step S131 illustrated in FIG. 3.

On the other hand, right rear image data is acquired (step S120).
Then, the following is done to detect the right-side boundary 320a. That is, range filter processing is performed on the image data to extract the edge of the image (step S132a). Then, based on the extracted edge, lane candidate positions are detected (step S132b). Further, invalid points are eliminated from the detected lane candidate positions (step S132c). Based on the results, a coordinate string of positions of the right-side boundary 320a is generated (step S132d). Also in this case, the generation of a coordinate string of positions of the right-side boundary 320a can contain a derivation of an approximation about the position of the right-side boundary 320a. Accordingly, the right-side boundary 320a is detected.

Further, regarding the detected right-side boundary 320a, the image coordinate system is transformed into a real world coordinate system (step S132e). Then, the second distance 220d is calculated based on the right-side boundary 320a whose coordinate system has been transformed (step S132f). For example, the distance between the right-side boundary 320a in a position of the right front wheel of the vehicle 250 and the vehicle 250 is calculated as the second distance 220d.

Then, the departure speed is calculated (step S134). That is, the speed at which the vehicle 250 approaches the right-side boundary 320a is calculated.

In the above case, step S120 corresponds to right image acquisition processing, step S132a to step S132d correspond to right lane detection processing, and step S132e, step S132f, and step S134 correspond to right lane distance estimation processing (second distance estimation processing). Step S132a to step S132f correspond to step S132 illustrated in FIG. 3.
In the present concrete example, the processing to horizontally flip the left-side image is performed, but the processing to flip horizontally may be performed on a right-side image.

Thus, in the left lane detection processing, the position of the left-side boundary 310a (for example, the visible lane marking) on the left side of the vehicle 250 is detected from left rear image data. Then, in the right lane detection processing, the position of the right-side boundary 320a (for example, the visible lane marking) on the right side of the vehicle 250 is detected from right rear image data. That is, the left-side boundary 310a and the right-side boundary 320a closest to the vehicle 250 on the left and right sides respectively are detected by image processing. At this point, not only the boundary closest to the vehicle 250, but also the second closest boundary may also be detected. In this case, the image processing method for the right-side (or the left-side) image can directly be applied by horizontally flipping the left-side (or the right-side) image and thus, processing can be made parallel and circuits can be made common more easily.

For example, time series images may be used for the left lane detection processing and right lane detection processing. Moreover, based on a detection result of the boundary of one of the left and right lanes, the position of the boundary of the other of the left and right lanes may be estimated or corrected.

The position of the detected (estimated) left-side boundary 310a and the position of the detected right-side boundary 320a can be held as a coordinate string or an approximation.

In the left lane detection processing and right lane detection processing, processing to correct vanishing point coordinates in an image can be performed by using bilateral symmetry of the vehicle 250. The processing to correct vanishing point coordinates in an image may also be performed based on the position of the detected left-side boundary 310a and the position of the detected right-side boundary 320a.

Then, in the left lane distance estimation processing (first distance estimation processing) and right lane distance estimation processing (second distance estimation processing), the coordinate transformation from the image coordinate system to the real world coordinate system is performed for the position of the detected left-side boundary 310a and the position of the detected right-side boundary 320a by using a coordinate transform matrix (Homography matrix) from an image plane to a road plane.

Then, two points are determined for each of boundaries (each of the left-side boundary 310a and the right-side boundary 320a) of lanes on the road plane obtained by the coordinate transformation to calculate the distance from the front wheel position of the vehicle 250 that does not appear in the image to the lane boundary from a formula of points and straight lines. From time series information of the calculated distance, the distances (the first distance 210d and the second distance 220d) to the boundaries of the present or future lane are estimated.

Then, the departure speed is calculated from the time series information of distance.
In the left lane distance estimation processing (first distance estimation processing) and right lane distance estimation processing (second distance estimation processing), processing to correct the coordinate transform matrix from the image coordinate system to the real world coordinate system by using a result of the vanishing point coordinate correction.

Then, based on an operation state of driving by the driver and the state of the vehicle 250, whether the warning is inhibited is determined (step S140a). If the warning is inhibited, the following departure determination is not made or a determination of not being in a departure state is made as a result of the departure determination. A concrete example of the determination of warning inhibition will be described later.

Then, for example, if the determination result of the warning inhibition is not a warning inhibition state, a departure determination is made (step S140). That is, a departure determination is made based on the calculated first distance 210d and second distance 220d. As will be described later, the departure speed calculated in step S133 and step S134 is partially used for the determination.

In step S140, if at least one of the first distance 210d being equal to the first reference value derived by the preset method or less and the second distance 220d being equal to the second reference value derived by the preset method or less applies, the vehicle 250 is determined to be in a departure state. At this point, the first signal sg1 is generated (step S150). That is, the first signal generation operation is performed.
Also in step S140, only if one of the first distance 210d being equal to the first reference value or less and the second distance 220d being equal to the second reference value or less applies, the vehicle 250 is determined to be in a departure state and at this point, the first signal sg1 is generated (step S150). That is, the first signal generation operation is performed.

In this manner, the lane departure warning signal output operation (step S160) including the determination of warning inhibition (step S140a), the determination of departure (step S140), and the generation of the first signal (step S150) is performed.
Then, when the first signal sg1 is generated, the driver is notified of the second signal sg2 (lane departure warning) based on the first signal sg1.

That is, a warning that draws driver' s attention is issued by at least one of, for example, the sound, vibration, odor, light, and display in a screen in accordance with the departure direction. The warning is held for a predetermined time after the start of issuance. The time in which a warning is held can be changed based on, for example, conditions derived by a predetermined method. The type and degree of the warning may be changed based on, for example, conditions derived by a predetermined method. For example, at least one of the hold time of warning, the type of warning, and the degree of warning may be changed based on, for example, the occurrence frequency of the lane departure state.

Moreover, at least one of a steering gear and a braking device of the vehicle 250 may be controlled. Accordingly, the lane departure can be avoided. In addition, a signal can be transmitted to other vehicles than the vehicle 250. Accordingly, for example, other vehicles running around the vehicles 250 can be assisted in avoiding the vehicle 250 that has departed from the lane (or is departing from the lane).

In the determination of departure, as described above, a departure from the lane is determined if the distance between the vehicle 250 and the boundary of the left or right lane is equal to a defined value or less. The defined value can be made variable depending on the departure speed.

If boundaries of the second closest and subsequent lanes are also detected, as well as the boundary of the closest lane when viewed from the vehicle 250, processing to determine whether the boundary (for example, the visible lane marking) of a lane is a double line may be performed. If the boundary is a double line, the danger of a departure determination can be increased.

An example of the determination of warning inhibition (step S140a) will be described below. The determination of warning inhibition inhibits a warning when, for example, lanes are changed.
When, for example, lanes are changed from the lane on which the vehicle 250 is running to the right lane, for example, the following operation is performed. The following is an example when the warning is not inhibited. That is, the direction indicator of the vehicle 250 is first turned ON to start a lane change operation. At this point, neither the left side nor the right side departs from the lane. Thereafter, the vehicle 250 approaches the boundary (the right-side boundary 320a) of the right-side lane. At this point, the left side does not depart from the lane and the right side is determined to be in a departure state. Thereafter, the vehicle 250 crosses the boundary (the right-side boundary 320a) of the right-side lane. At this point, the left side does not depart from the lane and the right side is in a non-detected state of the lane boundary. Thereafter, the vehicle 250 finishes crossing the right-side boundary 320a on the right side. At this point, the vehicle 250 is close to the boundary of the left-side lane and is determined to be in a departure state on the left side and not in a departure state on the right side. Thereafter, the direction indicator is turned OFF to end the lane change operation. At this point, neither the left side nor the right side departs from the lane. A case when no lane boundary is detected is also assumed to be no departure.

When the driver intends to perform an operation to change lanes, a warning can be inhibited from being issued while, for example, the direction indicator is operating to prevent a warning of lane departure from being generated. That is, while the direction indicator of the vehicle 250 is operating, the lane departure detection unit 130 does not perform the first signal generation operation that generates the first signal sg1.

Thus, the lane departure detection inhibition state includes an operating state of a direction indicator of the vehicle 250 and the lane departure detection unit 130 does not perform the first signal generation operation in the lane departure detection inhibition state.

Depending on the timing of a direction indicator operation, the operation of the direction indicator is terminated before the vehicle 250 finishes crossing the lane boundary on the right side. Thus, a lane departure warning determining more practical states can be generated by adding, after the lane boundary changes from a non-detected state to a detected state, not only the departure distance, but also the departure speed to conditions for determining the lane departure for a fixed period.
That is, if the elapsed time after the direction indicator changes from an operating state to a non-operating state is equal to a preset reference time or less, the lane departure detection unit 130 is able not to perform the first signal generation operation that generates the first signal sg1.

That is, the lane departure detection inhibition state includes a case when the elapsed time after the direction indicator changes from an operating state to a non-operating state is equal to a preset reference time or less and the lane departure detection unit 130 is able not to perform the first signal generation operation that generates the first signal sg1 in the lane departure detection inhibition state.

Each of the above steps can be interchanged in order within the range of technical possibility and may also be executed simultaneously. At least one of each step and processing containing a plurality of steps may be executed repeatedly.

For example, the above determination of warning inhibition (step S140a) and the above determination of departure (step S140) may be executed simultaneously in parallel and, for example, a result of the determination of warning inhibition may be reflected in an execution state of the determination of departure while the determination of departure is made. Also, the determination of warning inhibition may be made by using a result halfway through the determination of departure.

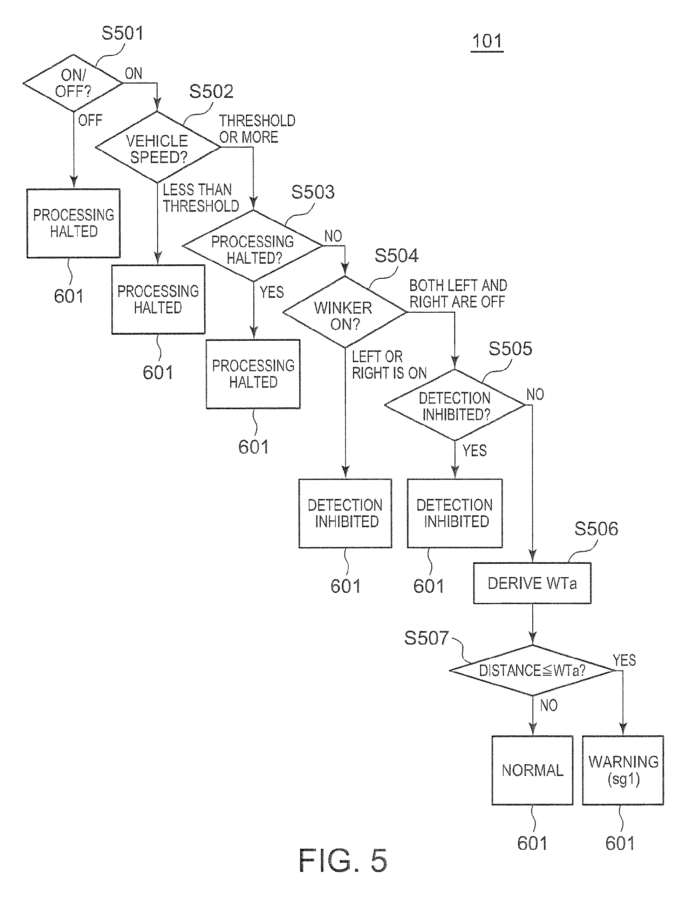

FIG. 5 is a flow chart illustrating the operation of the vehicle driving support device according to the first embodiment.
That is, FIG. 5 shows a concrete example of the lane departure warning signal output operation (step S160) by the vehicle driving support processing device 101.

The vehicle driving support processing device 101 performs the following processing for the following lane departure warning signal output operation (step S160). The following processing is incorporated into the lane departure detection unit 130 of the vehicle driving support processing device 101. The following processing is performed by, for example, the operation unit 140.

The following processing is processing that can be applied to both of the departure regarding the left-side lane of the vehicle 250 and the departure regarding the right-side lane. First, a case of the departure regarding the left-side lane will be described below.

As shown in FIG. 5, ON and OFF of the lane departure warning signal output operation (step S160) by the vehicle driving support processing device 101 follow an operation signal provided to the vehicle driving support processing device 101 from outside the vehicle driving support processing device 101 (step S501). The operation signal is supplied to the vehicle driving support processing device 101 via, for example, CAN (Controller Area Network).

An output state of a processing result by the lane departure warning signal output operation will be called an "LDWS result 601" below.

If the operation signal is OFF, the vehicle driving support processing device 101 outputs "processing halted" as the LDWS result 601. Then, the processing returns to step S501.

If the operation signal is ON, the processing proceeds to step S502. In step S502, if the speed of the vehicle 250 is less than a predetermined threshold, the vehicle driving support processing device 101 outputs "processing halted" as the LDWS result 601 before returning to step S501.
Then, in step S502, if the speed of the vehicle 250 is equal to the threshold or more, the processing proceeds to step S503.
At this point, the threshold desirably has hysteresis. That is, it is desirable that the threshold when the vehicle speed is rising and the threshold when the vehicle speed is falling be different. Accordingly, a lane departure warning that is less burdensome to the driver can be provided.

Thus, in the present concrete example, the lane departure detection inhibition state includes a case when the speed of the vehicle 250 is equal to a preset value or less and the lane departure detection unit 130 is able not to perform the first signal generation operation in the lane departure detection inhibition state.

In step S503, if the detection state of the LDWS result 601 is "processing halted", the vehicle driving support processing device 101 outputs "processing halted" as the LDWS result 601 to return to, for example, step S501.
In step S503, if the detection state of the LDWS result 601 is not "processing halted", the processing proceeds to step S504.

In step S504, if one of the left and right winkers (direction indicators) of the vehicle 250 is ON, the vehicle driving support processing device 101 outputs "detection inhibited" as the LDWS result 601. Alternatively, the vehicle driving support processing device 101 outputs "detection inhibited" as the LDWS result in a preset period after both of the left and right winkers become OFF. That is, the time when one of the left and right winkers is ON is a time when the driver intends to change the traveling direction of the vehicle 250 and under this condition, such a time can be excluded from the lane departure warning. The preset period after both of the left and right winkers become OFF is regarded, for example, as a time needed for the intended change of lanes of the vehicle 250 and also this case can be excluded from the lane departure warning. The period is set to, for example, 2 seconds or more and 10 seconds or less and, for example, about 5 seconds. The period may be made changeable by the driver. Moreover, the period may be made changeable based on the type of vehicle (the passenger car, truck, or bus).

In the detection inhibition, only detection processing may be inhibited after the camera and other control units are activated, processing to ignore a detection result may be performed after all processing is performed, or the camera may also be turned OFF for power saving.

Thus, in the present concrete example, the lane departure detection inhibition state includes a case when the direction indicator of the vehicle 250 is operating or a case when the elapsed time after the direction indicator changes from an operating state to a non-operating state is equal to a preset reference time or less. Then, if the direction indicator is operating or the elapsed time after the direction indicator changes from an operating state to a non-operating state is equal to a preset reference time or less, the first signal generation operation that generates the first signal sg1 is not performed.

Then, after "detection inhibited" being output as the LDWS result 601, for example, the processing returns to step S501. After "detection inhibited" being output as the LDWS result 601, for example, the processing may return to one of steps S502 to S504.

On the other hand, in step S504, if both of the left and right winkers are OFF, the processing proceeds to step S505. In this case, for example, after one of the left and right winkers being turned ON, the processing can proceed to step S505 if both of the left and right winkers are OFF when a preset period passes after both of the left and right winkers become OFF.

In step S505, if the LDWS result 601 is "detection inhibited", "detection inhibited" is output as the LDWS result before returning to, for example, step S501. After "detection inhibited" being output as the LDWS result 601, for example, the processing may return to one of steps S502 to S505.

On the other hand, in step S505, if the LDWS result 601 is not "detection inhibited", the processing proceeds to step S506.

In step S506, the vehicle driving support processing device 101 derives an execution warning setting point WTa from a warning setting point parameter WT held in advance and a departure speed Vd.

That is, the execution warning setting point WTa is derived as described below based on three ranges (the warning setting point parameter WT is less than -0.3 m, -0.3 m or more and 0.75 m or less, and more than 0.75 m) concerning the warning setting point parameter WT.

If the warning setting point parameter WT is less than -0.3 m, the execution warning setting point WTa is set to -0.3 m.

If the warning setting point parameter WT is -0.3 m or more and 0.75 m or less, the execution warning setting point WTa is set to the value of the warning setting point parameter WT.

If the warning setting point parameter WT is more than 0.75 m, the execution warning setting point WTa is set as WTa = 1.5 x Vd. If the execution warning setting point WTa (= 1.5 x Vd) at this point is less than 0.75 m, the execution warning setting point WTa is set to 0.75 m. If the execution warning setting point WTa (= 1.5 x Vd) is 0.75 m or more and 1.5 m or less, the execution warning setting point WTa is set as WTa = 1.5 x Vd. If the execution warning setting point WTa (= 1.5 x Vd) is more than 1.5 m, the execution warning setting point WTa is set to 1.5 m.

Then, if the execution warning setting point WTa derived for the three ranges (the warning setting point parameter WT is less than -0.3 m, -0.3 m or more and 0.75 m or less, and more than 0.75 m) concerning the warning setting point parameter WT as described above is larger than the warning setting point parameter WT, the execution warning setting point WTa is set to the value of the warning setting point parameter WT. If the derived execution warning setting point WTa is equal to the warning setting point parameter WT or less, the execution warning setting point WTa is retained as the value of the derived execution warning setting point WTa.

WT is related to how close the vehicle 250 should be to the lane to determine a warning and thus, a warning is issued earlier if WT is increased and a warning is issued later if WT is decreased. A mechanism like a volume switch capable of adjusting WT may be provided to suit preferences of the user.

Then, based on the execution warning setting point WTa derived in step S506 as described above, the distance (in this case, the first distance 210d) and the execution warning setting point WTa are compared (step S507).

In step S507, the distance (in this case, the first distance 210d) and the first reference value (execution warning setting point WTa) derived by a predetermined method are compared. Then, if the distance (first distance 210d) is equal to the first reference value (execution warning setting point WTa) or less, the vehicle driving support processing device 101 outputs a warning (generation of the first signal sg1) as the LDWS result 601. That is, the first signal generation operation is performed.

Then, in step S507, if the distance (first distance 210d) is larger than the first reference value (execution warning setting point WTa), the vehicle driving support processing device 101 outputs "normal" as the LDWS result 601. Thereafter, for example, the processing returns to step S501. After "normal" being output as the LDWS result 601, for example, the processing may return to one of steps S502 to S504.

Further, steps S501 to S507 described above are similarly executed for the departure regarding the right-side lane. For example, the method of deriving the above warning setting point parameter WT and the above execution warning setting point WTa may be the same or different for the departure regarding the left-side lane and the departure regarding the right-side lane. That is, the first reference value and the second reference value may be the same or different.

Steps S501 to S507 regarding the left-side lane and steps S501 to S507 regarding the right-side lane may be executed, for example, in parallel or alternately.

In the present concrete example, as described above, whether to perform processing is determined based on the vehicle speed in step S502 and if, for example, the vehicle 250 is stopped or driving at reduced speed, no lane departure warning is issued. Accordingly, the burden on the driver can be reduced by not providing information unnecessary for the driver.

In step S504, whether to perform processing is determined based on a winker operation. At this point, by providing an inhibition time of warning generation of a fixed period for the winker operation, issuance of an unnecessary lane departure warning can be inhibited when, for example, the visible lane marking is crossed to change lanes or the like so that the burden on the driver can be reduced.

In step S506, by using the departure speed Vd for the derivation of the execution warning setting point WTa, issuance of an unnecessary lane departure warning can be inhibited when, for example, one visible lane marking is approached, the visible lane marking is crossed, and another visible lane marking is approached so that the burden on the driver can be reduced.
That is, at least one of the first reference value and the second reference value can change with the speed of the vehicle 250.

Therefore, with the vehicle driving support processing device 101 and the vehicle driving support device 201 according to the present embodiment, the lane departure can be detected with stability. In addition, unnecessary information is inhibited from being provided to the driver so that lane departure information that is less burdensome to the driver can be provided.

### (Second embodiment)

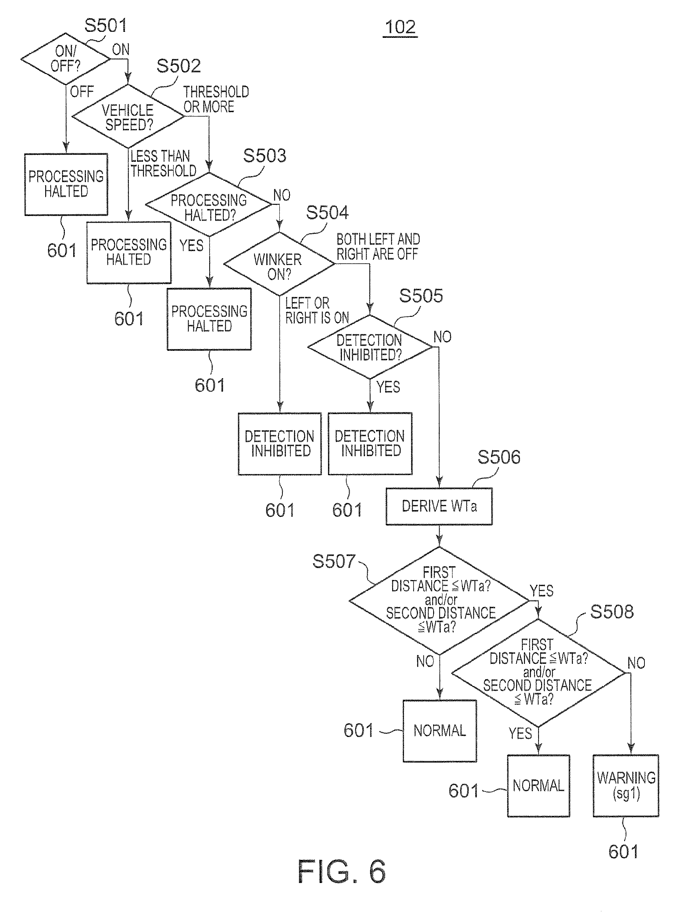

FIG. 6 is a flow chart illustrating the operation of the vehicle driving support device according to the second embodiment.

That is, FIG. 6 shows a concrete example of the lane departure warning signal output operation (step S160) by a vehicle driving support processing device 102 according to the present embodiment. The configuration of the vehicle driving support processing device 102 according to the present embodiment can be configured in the same manner as the vehicle driving support processing device 101 according to the first embodiment and thus, a description thereof is omitted. Differences of the operation of the vehicle driving support processing device 102 according to the present embodiment from the operation of the vehicle driving support processing device 101 will be described below.

As shown in FIG. 6, the operation of step S507 and thereafter of the vehicle driving support processing device 102 is different from the operation of the vehicle driving support processing device 101.
The vehicle driving support processing device 102 outputs "normal" as the LDWS result 601 if the first distance 210d is larger than the first reference value (execution warning setting point WTa) and the second distance 220d is larger than the second reference value (execution warning setting point WTa). That is, in this case, both of the first distance 210d and the second distance 220d on the left and right sides are larger than the reference value and thus, the vehicle 250 is not in a lane departure state. Therefore, no unnecessary lane departure warning is generated. Accordingly, the diver's burden can be reduced by not providing any warning unnecessary for the driver. Then, after "normal" being output as the LDWS result 601, for example, the processing returns to step S501. Alternatively, the processing may return to one of steps S502 to S504.

Then, if at least one of the first distance 210d being equal to the first reference value (execution warning setting point WTa) or less and the second distance 220d being equal to the second reference value (execution warning setting point WTa) or less applies, the processing proceeds to step S508.

Then, in step S508, if the first distance 210d is equal to the first reference value (execution warning setting point WTa) or less and the second distance 220d is equal to the second reference value (execution warning setting point WTa) or less, "normal" is output as the LDWS result 601. That is, this case corresponds to a state in which the vehicle 250 passes a narrow road and is not a lane departure state. Therefore, no unnecessary lane departure warning is generated.

That is, the present concrete example is an example in which the lane departure detection inhibition state includes a case when the width of the travel lane 301 is smaller than a predetermined reference value. A case when the first distance 210d is equal to the first reference value or less and the second distance 220d is smaller than the second reference value corresponds to a case when the width of the travel lane 301 is smaller than the sum of the width of the vehicle 250, the first reference value, and the second reference value. Then, if the width of the travel lane 301 is smaller than the predetermined reference value (in this case, the sum of the width of the vehicle 250, the first reference value, and the second reference value), the vehicle 250 is determined to be in a lane departure detection inhibition state and in such a case, the lane departure detection unit 130 does not perform the first signal generation operation.

Thus, by not providing a warning unnecessary for the driver when the vehicle 250 passes a narrow road, the burden on the driver can be reduced. Then, after "normal" being output as the LDWS result 601, for example, the processing returns to step S501. Alternatively, for example, the processing may return to one of steps S502 to S504.

Then, in step S508, if one of the first distance 210d being equal to the first reference value (execution warning setting point WTa) or less and the second distance 220d being equal to the second reference value (execution warning setting point WTa) or less applies, a warning (generation of the first signal sg1) is output as the LDWS result 601. That is, the first signal generation operation is performed.

Thus, in the present embodiment, whether the road through which the vehicle 250 passes is in a narrow state is determined based on whether both of the first distance 210d and the second distance 220d are larger or smaller than the reference value or one of both distances is smaller than the reference value so that a lane departure warning can be provided more appropriately without generating an unnecessary lane departure warning.

With the vehicle driving support processing device 102 according to the present embodiment and the vehicle driving support device 201 using the vehicle driving support processing device 102, the lane departure can be detected with stability. In addition, unnecessary information is inhibited from being provided to the driver so that a lane departure warning that is less burdensome to the driver can be provided.

In step S508 in the present concrete example, as described above, the determination of departure (step S140) is made and at the same time, the determination of warning inhibition (step S140a) is made.

Thus, when the lane departure detection unit 130 is in the lane departure detection inhibition state (for example, the speed of the vehicle 250 is low, the direction indicator is operating, or a fixed time has not passed after the operation of the direction indicator), the lane departure detection unit 130 is able not to estimate the first distance and the second distance and not to generate the first signal sg1.

Further, the lane departure detection unit 130 estimates the first distance between the left-side boundary 310a of the travel lane 301 on the left side of the vehicle 250 and the vehicle 250 based on left rear image data acquired by the first data acquisition unit 110 and the second distance between the right-side boundary 320a of the travel lane 301 on the right side of the vehicle 250 and the vehicle 250 based on right rear image data acquired by the second data acquisition unit 120 and if the first distance is equal to the first reference value derived by a preset method or less and the second distance is equal to the second reference value derived by a preset method or less, the lane departure detection unit 130 determines that the vehicle 250 is in a lane departure detection inhibition state (the road width is narrow). Then, when the vehicle 250 is in the lane departure detection inhibition state, the lane departure detection unit 130 is able not to generate the first signal sg1 (can inhibit the generation of the first signal sg1).

### (Third embodiment)

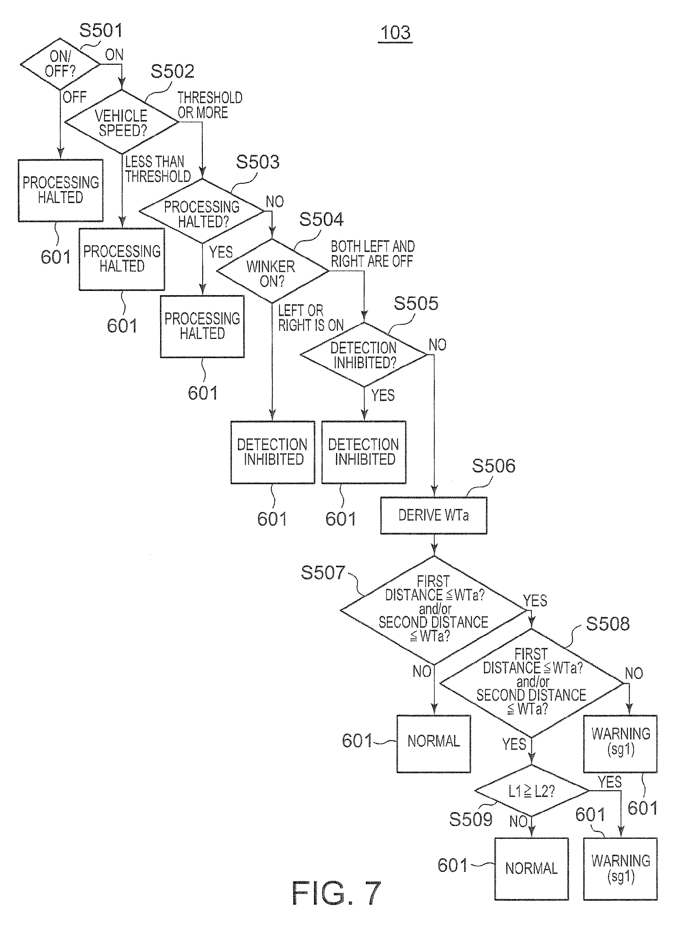

FIG. 7 is a flow chart illustrating the operation of the vehicle driving support device according to the third embodiment.
That is, FIG. 7 shows a concrete example of the lane departure warning signal output operation (step S160) by a vehicle driving support processing device 103 according to the present embodiment. The configuration of the vehicle driving support processing device 103 according to the present embodiment can be configured in the same manner as the vehicle driving support processing devices 101, 102 and thus, a description thereof is omitted. Differences of the operation of the vehicle driving support processing device 103 according to the present embodiment from the operation of the vehicle driving support processing device 102 will be described below.

As shown in FIG. 7, the operation of step S508 and thereafter of the vehicle driving support processing device 103 is different from the operation of the vehicle driving support processing device 102.

In step S508, if one of the first distance 210d being equal to the first reference value (execution warning setting point WTa) or less and the second distance 220d being equal to the second reference value (execution warning setting point WTa) or less applies, the vehicle driving support processing device 103 outputs a warning (generation of the first signal sg1) as the LDWS result 601. That is, the first signal generation operation is performed.

That is, if the first distance 210d is equal to the first reference value (execution warning setting point WTa) or less and the second distance 220d is equal to the second reference value (execution warning setting point WTa) or less, the processing proceeds to step S509.

In step S509, an estimated lane width L1 and a lane width threshold L2 determined by a preset method are compared. The estimated lane width L1 is an estimated value about the width of the travel lane 301 on which the vehicle 250 is running and is, for example, the sum of the width of the vehicle 250, the first distance 210d, and the second distance 220d. The lane width threshold L2 is determined by a method preset based on the speed of the vehicle 250. The lane width threshold L2 is set large for a high speed of the vehicle 250 and small for a low speed of the vehicle 250.

If the estimated lane width L1 is less than the lane width threshold L2, "normal" is output as the LDWS result 601. That is, that the estimated lane width L1 is smaller than the lane width threshold L2 corresponds to a case when the vehicle 250 passes a road narrower than the lane width threshold L2. In this case, the vehicle 250 is not in a departure state and no unnecessary lane departure warning is allowed to be generated. Accordingly, the burden on the driver can be reduced by not providing warnings unnecessary to the driver. Then, after "normal" being output as the LDWS result 601, for example, the processing returns to step S501. Alternatively, for example, the processing may return to one of steps S502 to S504.

Thus, the lane departure detection inhibition state includes a case when the width (estimated lane width L1) of the travel lane 301 is smaller than the reference value (lane width threshold L2) derived by a preset method and the lane departure detection unit 130 is able not to perform the first signal generation operation in the lane departure detection inhibition state.

Then, that the estimated lane width L1 is equal to the lane width threshold L2 or more corresponds to a case when the vehicle 250 passes a wide road and is in a departure state and thus, a warning (generation of the first signal sg1) is output as the LDWS result 601. That is, the first signal generation operation is performed.

Therefore, according to the present embodiment, the width of the road through which the vehicle 250 passes can be grasped more accurately by comparing the estimated lane width L1 and the lane width threshold L2 so that a lane departure warning can be provided more appropriately.

With the vehicle driving support processing device 103 according to the present embodiment and the vehicle driving support device 201 using the vehicle driving support processing device 103, the lane departure can be detected with stability. In addition, unnecessary information is inhibited from being provided to the driver so that a lane departure warning that is less burdensome to the driver can be provided.

The above steps S501 to S509 can be interchanged in order within the range of technical possibility and may also be executed simultaneously. At least one of each step and processing containing a plurality of steps may be executed repeatedly.

The left rear imaging unit 210 and the right rear imaging unit 220 in the vehicle driving support device 201 according to an embodiment of the present invention can each be arranged, for example, on a side mirror of the vehicle 250. However, embodiments of the present invention are not limited to such an example and the installation location of the left rear imaging unit 210 and the right rear imaging unit 220 on the vehicle 250 is any location.

The imaging range of the left rear imaging unit 210 may contain, for example, the left adjacent lane adjacent to the travel lane 301 on which the vehicle 250 runs on the left side. Also, the imaging range of the right rear imaging unit 220 may contain, for example, the right adjacent lane adjacent to the travel lane 301 on which the vehicle 250 runs on the right side.

A left rear image captured by the left rear imaging unit 210 may be displayed in a display device provided in, for example, a dashboard of the vehicle 250 to present the image to the driver. Similarly, a right rear image captured by the right rear imaging unit 220 may be displayed in the display device provided in, for example, the dashboard of the vehicle 250 to present the image to the driver. When a left rear image captured by the left rear imaging unit 210 or a right rear image captured by the right rear imaging unit 220 is displayed in the display device, the region where such an image is displayed and the region of an image to derive the left-side boundary 310a and the right-side boundary 320a may be the same or different. The display device may have a function to display an image captured by the left rear imaging unit 210 by horizontally flipping the image. Also, the display device may have a function to display an image captured by the right rear imaging unit 220 by horizontally flipping the image.

It is assumed above that the left-side boundary 310a is set as the center of the left visible lane marking 310 and the right-side boundary 320a is set as the center of the right visible lane marking 320 to simplify the description, but if, for example, one of the left and right visible lane markings is not provided on the travel lane 301, the left-side boundary 310a or the right-side boundary 320a is regarded, for example, as the position of an incidental visible road feature indicating an edge of the left or right road of the travel lane 301 and processing like the above one is performed.

The embodiments of the present invention have been described above with reference to concrete examples. However, the present invention is not limited to such concrete examples. For example, the concrete configuration of each element such as a data acquisition unit and a lane departure detection unit contained in a vehicle driving support processing device and an imaging unit and a warning generator unit contained in a vehicle driving support device is included in the scope of the present invention as long as a person skilled in the art can carry out the present invention by making an appropriate selection from the publicly known range and obtain similar effects.
Any combination of two elements of each concrete example or more within the range of technical possibility is included in the scope of the present invention as long as the spirit of the present invention is contained.

Some embodiments have been described above, but these embodiments are shown simply as examples and do not intend to limit the scope of the present invention. Actually, novel devices and methods described herein may be embodied in various other forms and further various omissions, substitutions, or alterations in forms of devices and methods described herein may be made without deviating from the gist and spirit of the present invention. Appended claims and equivalents or equivalent methods thereof are intended to contain such forms or modifications so as to be included in the scope, gist, or spirit of the present invention.

In addition, all vehicle driving support processing devices and vehicle driving support devices that can be implemented by a person skilled in the art by appropriately changing the design based on the vehicle driving support processing device and vehicle driving support device described above as an embodiment of the present invention as long as the gist of the present invention is contained.

In addition, a person skilled in the art can conceive of various alterations and modifications within the category of ideas of the present invention and it is understood that such alterations and modifications also belong to the scope of the present invention.

## Claims

1. A vehicle driving support processing device, comprising:
a first data acquisition unit that acquires left rear image data captured by a left rear imaging unit capturing a left rear image of a vehicle running on a travel lane;
a second data acquisition unit that acquires right rear image data captured by a right rear imaging unit capturing a right rear image of the vehicle; and
a lane departure detection unit having a lane departure detection state and a lane departure detection inhibition state, wherein
the lane departure detection unit in the lane departure detection state
estimates a first distance between a left-side boundary of the travel lane on a left side of the vehicle and the vehicle based on the left rear image data acquired by the first data acquisition unit,
estimates a second distance between a right-side boundary of the travel lane on a right side of the vehicle and the vehicle based on the right rear image data acquired by the second data acquisition unit, and
performs a first signal generation operation to generate a first signal for at least one of providing a warning to a driver of the vehicle, controlling at least one of a steering gear and a braking device of the vehicle, and transmitting a signal to other vehicles than the vehicle when at least one of the first distance being equal to a first reference value derived by a preset method or less and the second distance being equal to a second reference value derived by a preset method or less applies.

2. A vehicle driving support processing device, comprising:
a first data acquisition unit that acquires left rear image data captured by a left rear imaging unit capturing a left rear image of a vehicle running on a travel lane;
a second data acquisition unit that acquires right rear image data captured by a right rear imaging unit capturing a right rear image of the vehicle; and
a lane departure detection unit having a lane departure detection state and a lane departure detection inhibition state, wherein
the lane departure detection unit in the lane departure detection state
estimates a first distance between a left-side boundary of the travel lane on a left side of the vehicle and the vehicle based on the left rear image data acquired by the first data acquisition unit,
estimates a second distance between a right-side boundary of the travel lane on a right side of the vehicle and the vehicle based on the right rear image data acquired by the second data acquisition unit, and
performs a first signal generation operation to generate a first signal for at least one of providing a warning to a driver of the vehicle, controlling at least one of a steering gear and a braking device of the vehicle, and transmitting a signal to other vehicles than the vehicle when one of the first distance being equal to a first reference value derived by a preset method or less and the second distance being equal to a second reference value derived by a preset method or less applies.

3. The vehicle driving support processing device according to claim 1, wherein the lane departure detection inhibition state includes a case when a direction indicator of the vehicle is in an operating state and
the lane departure detection unit does not perform the first signal generation operation in the lane departure detection inhibition state.

4. The vehicle driving support processing device according to claim 1, wherein the lane departure detection inhibition state includes a case when an elapsed time after the direction indicator changes from an operating state to a non-operating state is equal to a preset reference time or less and
the lane departure detection unit does not perform the first signal generation operation in the lane departure detection inhibition state.

5. The vehicle driving support processing device according to claim 1, wherein the lane departure detection inhibition state includes a case when a speed of the vehicle is a preset value or less and
the lane departure detection unit does not perform the first signal generation operation in the lane departure detection inhibition state.

6. The vehicle driving support processing device according to claim 1, wherein the lane departure detection inhibition state includes a case when a width of the travel lane is smaller than reference value derived by a preset method and
the lane departure detection unit does not perform the first signal generation operation in the lane departure detection inhibition state.

7. The vehicle driving support processing device according to claim 1, wherein at least one of the first reference value and the second reference value changes with a speed of the vehicle.

8. A vehicle driving support device, comprising:
the vehicle driving support processing device according to claim 1;
the left rear imaging unit that captures the left rear image of the vehicle; and
the right rear imaging unit that captures the right rear image of the vehicle.

9. The vehicle driving support device according to claim 8, further comprising a warning generator that acquires the first signal and generates a second signal containing at least one of a sound signal, a tactile signal, an olfactory signal, and an optical signal based on the first signal.

10. A vehicle device, comprising:
a first data acquisition unit that acquires left rear image data captured by a left rear imaging unit capturing a left rear image of a vehicle running on a travel lane, wherein
a first distance between a left-side boundary of the travel lane on a left side of the vehicle and the vehicle is estimated based on the left rear image data acquired by the first data acquisition unit and
when the first distance is equal to a first reference value derived by a preset method or less, a departure of the vehicle from a lane is detected.

11. The vehicle device according to claim 10, comprising:
a second data acquisition unit that acquires right rear image data captured by a right rear imaging unit capturing a right rear image of the vehicle, wherein
a second distance between a right-side boundary of the travel lane on a right side of the vehicle and the vehicle is estimated based on the right rear image data acquired by the second data acquisition unit and
when the second distance is equal to a second reference value derived by a preset method or less, the departure of the vehicle from the lane is detected.

12. The vehicle device according to claim 10, wherein the left rear imaging unit is arranged on a left lateral of the vehicle to image a lane present on the left lateral or on a left rear of the vehicle.

13. The vehicle device according to claim 12, wherein the left rear imaging unit is arranged on a left mirror door of the vehicle or near a left front wheel.

14. The vehicle device according to claim 10, wherein if a width of the travel lane is narrower than a reference value derived by a preset method, the lane is detected not to be departed.

15. The vehicle device according to claim 10, wherein the first reference value changes at an approach speed in a direction perpendicular to the lane of the vehicle.
